# EUROPEAN PATENT APPLICATION

(11) **EP 4 746 542 A1**
(43) Date of publication of application: **20.05.2026**
(21) Application number: 24840038.4
(22) Date of filing: 08.07.2024
(51) Int. Cl.: H04W 56/00, H04W 48/10, H04W 84/06, H04W 74/00

(54) **METHOD, USER EQUIPMENT, PROCESSING DEVICE, AND STORAGE MEDIUM FOR RECEIVING DOWNLINK SIGNAL, AND METHOD, BASE STATION, PROCESSING DEVICE, AND STORAGE MEDIUM FOR TRANSMITTING DOWNLINK SIGNAL**

(30) Priority: 10.07.2023 KR 20230088986
(71) Applicant: Hyundai Mobis Co., Ltd., Gangnam-gu Seoul 06141 (KR)
(72) Inventor: KIM, Tae Hyoung, Cheonan-si, Chungcheongnam-do 31168 (KR)
(74) Representative: Jung, Minkyu
(86) International application number: PCT/KR2024/009688
(87) International publication number: WO 2025/014226

(57) **Abstract**

In a first frequency band supporting a TN and an NTN, a UE may: attempt SSB detection on the basis of a first SSB occasion pattern defined for the TN; and attempt SSB detection on the basis of a second SSB occasion pattern defined for the NTN. The second SSB occasion pattern may include the smaller number of SSB occasions than the number of SSB occasions within the first SSB occasion pattern.

## Description

### TECHNICAL FIELD

The present disclosure relates to a wireless communication system.

### BACKGROUND

Various devices and technologies have emerged and been widespread, such as machine-to-machine (M2M) communication, machine type communication (MTC), and smartphones and tablet personal computers (PCs) requiring high data throughput. Accordingly, the amount of data required to be processed in a cellular network has been increasing very rapidly. To satisfy this rapidly increasing data processing demand, technologies for efficiently using more frequency bands, such as carrier aggregation and cognitive radio, and technologies for increasing a data capacity transmitted within a limited frequency, such as multiple antennas and multi-base station (BS) cooperation are under development.

To provide wireless communication services to locations where ground connections are technically very difficult or costly to provide wireless communication services through terrestrial networks, supporting wireless communication services through non-terrestrial networks (NTNs) has recently been considered.

### DISCLOSURE

### TECHNICAL PROBLEM

A method for providing a wireless communication signal to a user equipment (UE) accurately and efficiently via an airborne platform or space is required.

Further, a method for enabling coexistence between a terrestrial network (TN) and a non-terrestrial network (NTN) is required.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In an aspect of the present disclosure, a method for receiving a downlink signal by a user equipment (UE) in a wireless communication system is provided. The method includes attempting to detect a synchronization signal block (SSB) on a first frequency band supporting both a terrestrial network (TN) and a non-terrestrial network (NTN), acquiring time and frequency synchronization with a cell based on detection of an SSB on the cell, and transmitting a physical random access channel (PRACH) based on the SSB. Attempting to detect the SSB on the first frequency band includes attempting SSB detection based on a first SSB occasion pattern defined for the TN, and attempting SSB detection based on a second SSB occasion pattern defined for the NTN. The second SSB occasion pattern includes a smaller number of SSB occasions than the number of SSB occasions in the first SSB occasion pattern.

In another aspect of the present disclosure, a UE configured to receive a downlink signal in a wireless communication system is provided. The UE includes at least one transceiver, at least one processor, and at least one computer memory operably connected to the at least one processor and storing instructions that, when executed, cause the at least one processor to perform operations. The operations include attempting to detect an SSB on a first frequency band supporting both a TN and an NTN, acquiring time and frequency synchronization with a cell based on detection of an SSB on the cell, and transmitting a PRACH based on the SSB. Attempting to detect the SSB on the first frequency band includes attempting SSB detection based on a first SSB occasion pattern defined for the TN, and attempting SSB detection based on a second SSB occasion pattern defined for the NTN. The second SSB occasion pattern includes a smaller number of SSB occasions than the number of SSB occasions in the first SSB occasion pattern.

In another aspect of the present disclosure, a processing device is provided. The processing device includes at least one processor, and at least one computer memory operably connected to the at least one processor and storing instructions that, when executed, cause the at least one processor to perform operations. The operations include attempting to detect an SSB on a first frequency band supporting both a TN and an NTN, acquiring time and frequency synchronization with a cell based on detection of an SSB on the cell, and transmitting a PRACH based on the SSB. Attempting to detect the SSB on the first frequency band includes attempting SSB detection based on a first SSB occasion pattern defined for the TN, and attempting SSB detection based on a second SSB occasion pattern defined for the NTN. The second SSB occasion pattern includes a smaller number of SSB occasions than the number of SSB occasions in the first SSB occasion pattern.

In another aspect of the present disclosure, a computer-readable storage medium is provided. The storage medium stores at least one program code including instructions that, when executed, cause at least one processor to perform operations. The operations include attempting to detect an SSB on a first frequency band supporting both a TN and an NTN, acquiring time and frequency synchronization with a cell based on detection of an SSB on the cell, and transmitting a PRACH based on the SSB. Attempting to detect the SSB on the first frequency band includes attempting SSB detection based on a first SSB occasion pattern defined for the TN, and attempting SSB detection based on a second SSB occasion pattern defined for the NTN. The second SSB occasion pattern includes a smaller number of SSB occasions than the number of SSB occasions in the first SSB occasion pattern.

In each aspect of the present disclosure, attempting SSB detection based on the first SSB occasion pattern may be performed on a first synchronization raster defined for the TN.

In each aspect of the present disclosure, attempting SSB detection based on the second SSB occasion pattern may be performed on a second synchronization raster defined for the NTN.

In each aspect of the present disclosure, each SSB occasion within the first SSB occasion pattern and the second SSB occasion pattern may correspond to a (candidate) SSB (or a (candidate) SSB index) within a synchronization signal (SS) burst transmitted with a predetermined periodicity.

In each aspect of the present disclosure, the SSB occasions within the first SSB occasion pattern may be associated with (candidate) SSBs (or (candidate) SSB indexes) within a first SS burst, respectively, and the SSB occasions within the second SSB occasion pattern may be associated with (candidate) SSBs (or (candidate) SSB indexes) within a second SS burst, respectively.

In each aspect of the present disclosure, the first SS burst and the second SS burst may exist in different half frames.

In each aspect of the present disclosure, the first SSB occasion pattern may have a first periodicity, and the second SSB occasion pattern may have a second periodicity longer than the first periodicity.

In each aspect of the present disclosure, the method or the operations may include attempting SSB detection based on a third SSB occasion pattern on a second frequency band that does not support the NTN.

The above solutions are only some of the examples of the present disclosure, and various examples reflecting the technical features of the present disclosure may be derived and understood by those skilled in the art from the following detailed description.

### ADVANTAGEOUS EFFECTS

According to some implementations of the present disclosure, a wireless communication signal may be efficiently transmitted/received via an airborne platform or space. Accordingly, the overall throughput of a wireless communication system may be increased.

According to some implementations of the present disclosure, the continuity of a wireless communication service may be guaranteed, the reliability of the wireless communication service may be strengthened through connectivity between various access technologies, and network resilience and reliability against disasters may be enhanced.

According to some implementations of the present disclosure, coexistence between a non-terrestrial network (NTN) and a terrestrial network (NT) may be supported.

According to some implementations of the present disclosure, even when an NTN and a TN coexist in a frequency band, a user equipment (UE) may detect a synchronization signal block (SSB) effectively.

The effects obtainable from the present disclosure are not limited to the effects described above, and other effects not described may be clearly understood by those skilled in the art to which the present disclosure belongs from the description below.

### BRIEF DESCRIPTION OF THE DRAWINGS

The appended drawings, which are included as a part of the detailed description to aid in the understanding of the implementations of the present disclosure, provide examples of the implementations of the present disclosure and, together with the detailed description, describe the implementations of the present disclosure, in which:
FIG. 1 illustrates an example of a communication system 1 to which implementations of the present disclosure may be applied;
FIG. 2 is a block diagram illustrating an example of communication devices that may perform a method according to the present disclosure;
FIG. 3 illustrates an example of a frame structure available in a 3^{rd} generation partnership project (3GPP) wireless communication system;
FIG. 4 illustrates a resource grid for the duration of a slot;
FIG. 5 illustrates a multi-beam operation in a 3GPP system;
FIG. 6 illustrates an example of transmitting SS/PBCH blocks (SSBs) on a cell;
FIG. 7 illustrates a non-terrestrial network (NTN) structure;
FIG. 8 illustrates synchronization rasters and channel rasters used in some implementations;
FIG. 9 illustrates a situation where a terrestrial network (TN) and a non-terrestrial network (NTN) coexist;
FIG. 10 illustrates an SSB structure transmitted by a base station (BS);
FIG. 11 illustrates part of an SSB reception process according to some implementations of the present disclosure;
FIG. 12 illustrates NTN/TN distinction according to some implementations of the present disclosure;
FIGS. 13 and 14 illustrate NTN/TN distinction according to other implementations of the present disclosure;
FIG. 15 illustrates NTN/TN distinction according to other implementations of the present disclosure;
FIG. 16 illustrates part of a downlink reception flow according to some implementations of the present disclosure; and
FIG. 17 illustrates part of a downlink transmission flow according to some implementations of the present disclosure.

### DETAILED DESCRIPTION

Implementations of the present disclosure will be described below in detail with reference to the accompanying drawings. The following detailed description, along with the accompanying drawings, is intended to describe exemplary implementations of the present disclosure and does not intend to represent the only implementation form in which the present disclosure may be practiced. The following detailed description includes specific details to provide a thorough understanding of the present disclosure. However, those skilled in the art will understand that the present disclosure may be practiced without these specific details.

In some cases, well-known structures and devices may be omitted to avoid obscuring the concepts of the present disclosure, or may be shown in the form of a block diagram focusing on the core functions of each structure and device. Further, the same drawing reference numerals are used for the same components throughout the present disclosure.

The techniques, devices, and systems described below may be applied to various wireless multiple access systems.

However, the technical features of the present disclosure are not limited thereto. For example, even if the following detailed description is given based on 3GPP long term evolution (LTE) or 5^{th} generation (5G) technology, some implementations of the present disclosure are applicable to any other mobile communication system and systems (e.g., 6G) to be introduced in the future, except for matters inherent to 3GPP LTE/5G.

For terms and techniques used in the present disclosure that are not specifically described, reference may be made to 3GPP standard documents, such as 3GPP TS 23.304, 3GPP TS 23.285, 3GPP TS 23.287, 3GPP TS 24.587, 3GPP TS 36.211, 3GPP TS 36.212, 3GPP TS 36.213, 3GPP TS 36.300, 3GPP TS 36.321, 3GPP 36.322, 3GPP TS 36.323, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.322, 3GPP TS 38.323, and 3GPP TS 38.331.

In the examples of the present disclosure described later, when it is said that a device "assumes," this may mean that an entity transmitting a channel transmits the channel in a way corresponding to the "assumption." This may mean that an entity receiving the channel receives or decodes the channel in the way corresponding to the "assumption," under the premise that the channel was transmitted in the way corresponding to the "assumption."

In the present disclosure, a user equipment (UE) may be fixed or mobile, and include various devices communicating with a base station (BS) to transmit and/or receive user data and/or various pieces of control information. The UE may be referred to as a terminal equipment (TE), a mobile station (MS), a mobile terminal (MT), a user terminal (UT), or the like. In the present disclosure, a BS generally refers to a fixed station that communicates with a UE and/or another BS, and exchanges various data and control information with a UE and another BS. The BS may be referred to by other terms such as an advanced base station (ABS), a Node-B (NB), an evolved-NodeB (eNB), a gNB, a base transceiver system (BTS), an access point, a processing server (PS), or the like. For convenience of description, the term BS is collectively used regardless of the type or version of communication technology.

In the present disclosure, a node refers to a fixed point capable of transmitting/receiving wireless signals to/from a UE by communicating with the UE. Various types of BSs may be used as nodes regardless of their names. At least one antenna is installed in one node. The antenna may refer to a physical antenna, or it may refer to an antenna port, a virtual antenna, or an antenna group. A node is sometimes called a point.

The 3GPP communication system uses the concept of a cell to manage radio resources, and a cell associated with radio resources is distinguished from a cell of a geographical area. The "cell" of a geographical area may be understood as coverage where a node may provide a service using a carrier, and the "cell" of radio resources is associated with a bandwidth (BW), which is a frequency range configured by the carrier. Since downlink (DL) coverage, which is a range where a node may transmit a valid signal, and uplink (UL) coverage, which is a range where the node may receive a valid signal from a UE, depend on a carrier carrying the signals, the coverage of the node is also associated with the coverage of a "cell" of radio resources used by the node. Therefore, the term "cell" may sometimes be used to mean the coverage of a service by a node, sometimes radio resources, and sometimes a range where a signal using the radio resources may arrive with a valid strength.

A "cell" associated with radio resources may be defined as a combination of DL resources and UL resources, that is, a combination of a DL component carrier (CC) and a UL CC. A cell may be configured with DL resources alone, or with a combination of DL resources and UL resources. When carrier aggregation is supported, linkage between the carrier frequency of the DL resources (or DL CC) and the carrier frequency of the UL resources (or UL CC) may be indicated by system information. The carrier frequency may be the same as or different from the center frequency of each cell or CC.

In a wireless communication system, a UE receives information from a BS through a DL, and the UE transmits information to the BS through a UL. The information transmitted and/or received by the BS and the UE includes data and various pieces of control information, and various physical channels exist depending on the type/purpose of the information they transmit and/or receive.

The 3GPP communication standard defines DL physical channels corresponding to resource elements that carry information originating from higher layers, and DL physical signals corresponding to resource elements that are used by the physical layer but do not carry information originating from the higher layers. For example, the physical downlink shared channel (PDSCH), physical broadcast channel (PBCH), and physical downlink control channel (PDCCH) are defined as DL physical channels, and a reference signal (RS) and a synchronization signal are defined as DL physical signals. An RS, also called a pilot, refers to a predefined signal with a specific waveform known to both the BS and the UE. For example, a demodulation reference signal (DMRS) and a channel state information RS (CSI-RS) are defined as DL RSs. The 3GPP communication standard defines UL physical channels corresponding to resource elements that carry information originating from higher layers, and UL physical signals corresponding to resource elements that are used by the physical layer but do not carry information originating from the higher layers. For example, the physical uplink shared channel (PUSCH), physical uplink control channel (PUCCH), and physical random access channel (PRACH) are defined as UL physical channels, and a DMRS for UL control/data signals and a sounding reference signal (SRS) used for UL channel measurement are defined.

In the present disclosure, the PDCCH refers to a set of time-frequency resources (e.g., resource elements (REs)) carrying downlink control information (DCI), and the PDSCH refers to a set of time-frequency resources carrying DL data. Further, the PUCCH, PUSCH, and PRACH respectively refer to a set of time-frequency resources carrying uplink control information (UCI), UL data, and a random access preamble. When it is said below that a UE/BS transmits/receives the PUCCH/PUSCH/PRACH, this means that a UE/BS transmits/receives UCI/UL data/a random access preamble on or through the PUCCH/PUSCH/PRACH, respectively. Further, when it is said that a BS/UE transmits/receives the PBCH/PDCCH/PDSCH, this means that a BS/UE transmits/receives broadcast information/DCI/DL data on or through the PBCH/PDCCH/PDSCH, respectively.

In the present disclosure, radio resources (e.g., time-frequency resources) that the BS schedules or configures for the UE for transmission or reception of the PUCCH/PUSCH/PDSCH are sometimes referred to as PUCCH/PUSCH/PDSCH resources.

Since a communication device receives physical channels and/or physical signals in the form of wireless signals on a cell, it is not capable of selectively receiving only a wireless signal including a specific physical channel or physical signal through a radio frequency (RF) receiver, or selectively receiving only a wireless signal excluding a specific physical channel or physical signal through the RF receiver. In an actual operation, the communication device first receives a wireless signal on a cell through the RF receiver, converts the wireless signal which is an RF band signal into a baseband signal, and decodes a physical signal and/or physical channel within the baseband signal using one or more processors. Therefore, in some implementations of the present disclosure, when it is said that the communication device does not receive a physical signal and/or a physical channel, this does not actually mean that the communication device does not receive a wireless signal including the physical signal and/or the physical channel at all, but rather it means that the communication device does not attempt to reconstruct the physical signal and/or the physical channel from the wireless signal, that is, the communication device does not attempt to decode the physical signal and/or the physical channel.

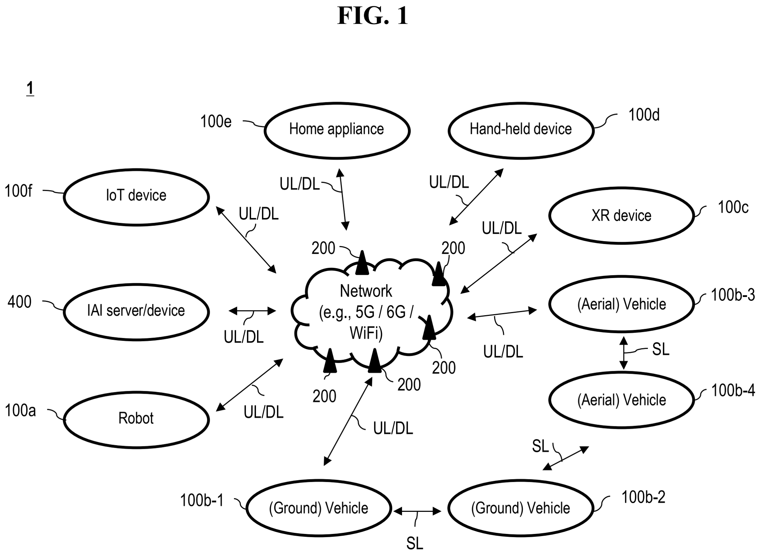

FIG. 1 illustrates an example of a communication system 1 to which implementations of the present disclosure may be applied.

Referring to FIG. 1, the communication system 1 to which the present disclosure is applied includes wireless devices, a BS, and a network. A wireless device may refer to a device that performs communication using a radio access technology (RAT) (e.g., 5G New RAT (NR), LTE (e.g., E-UTRA), WiFi, or 6G to be introduced in the future).

The wireless devices may include, but are not limited to, a robot 100a, vehicles 100b-1, 100b-2, 100b-3, and 100b-4, an extended reality (XR) device 100c, a handheld device 100d, a home appliance 100e, an internet of thing (IoT) device 100f, and an artificial intelligence (AI) device/server 400. For example, the vehicles may include a ground vehicle equipped with a wireless communication function, an autonomous driving vehicle, and a vehicle capable of performing vehicle-to-vehicle communication. Herein, the vehicles may include an unmanned aerial vehicle (UAV) (e.g., a drone) and an urban air mobility (UAM) (e.g., unmanned aerial transportation). The XR device may include an augmented reality (AR)/virtual reality (VR)/mixed reality (MR) device. The handheld device may include a smartphone, a smart pad, a wearable device (e.g., a smart watch and smart glasses), a computer (e.g., a laptop), and the like. The home appliance may include a TV, a refrigerator, a washing machine, and the like. The IoT device may include a sensor, a smart meter, and the like. For example, a BS and a network may also be implemented as wireless devices, and a specific wireless device may operate as a BS/network node for other wireless devices.

The wireless devices 100a to 100f may be connected to a network through a BS 200. AI technology may be applied to the wireless devices 100a to 100f, and the wireless devices 100a to 100f may be connected to the AI server 400 through the network. Although the wireless devices 100a to 100f may communicate with each other through the BS 200/network, they may also communicate directly (e.g., sidelink communication) without intervention of the BS/network. For example, the vehicles 100b-1, 100b-2, 100b-3, and 100b-4 may perform direct communication (e.g., vehicle-to-vehicle (V2V)/vehicle-to-everything (V2X) communication). Further, the IoT device (e.g., sensor) may communicate directly with another IoT device (e.g., sensor) or other wireless devices 100a to 100f.

Wireless communication/connection may be established between the wireless devices 100a to 100f/BS 200 and the BS 200/wireless devices 100a to 100f. The wireless communication/connection may be established through various wireless access technologies (e.g., 5G NR) for UL/DL communication and sidelink (SL) communication (or D2D communication). Through the wireless communication/connection (UL/DL or SL), the wireless devices and the BS/wireless devices may transmit/receive wireless signals to/from each other. To this end, at least some of various configuration information configuring procedures, various signal processing procedures (e.g., channel encoding/decoding, modulation/demodulation, resource mapping/demapping, and so on), and a resource allocation procedure, for transmission/reception of wireless signals, may be performed based on various proposals of the present disclosure.

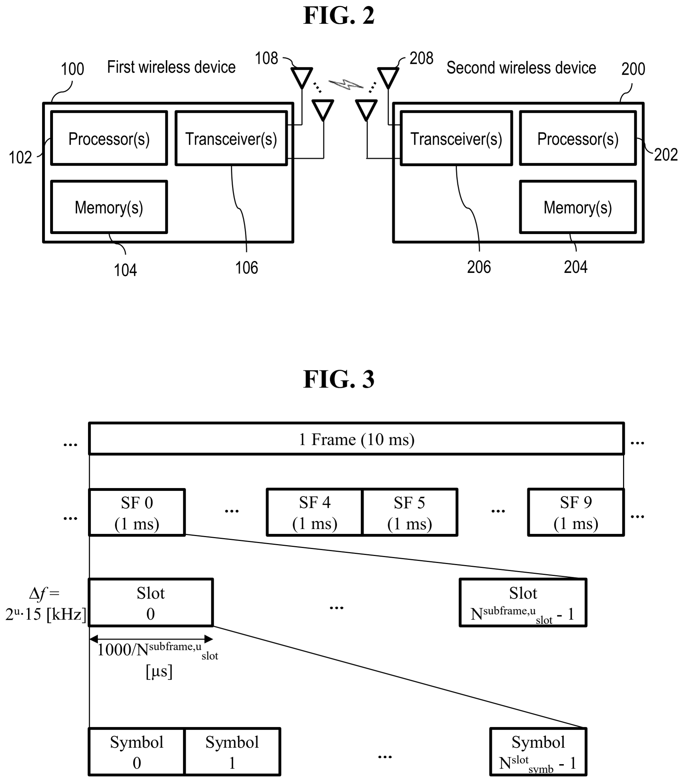

FIG. 2 is a block diagram illustrating an example of communication devices that may perform a method according to the present disclosure. Referring to FIG. 2, a first wireless device 100 and a second wireless device 200 may transmit and/or receive wireless signals through various wireless access technologies. The {first wireless device 100, second wireless device 200} may correspond to the {wireless device 100x, BS 200} and/or the {wireless device 100x, wireless device 100x} in FIG. 1.

Each of the first wireless device 100 and the second wireless device 200 may include one or more processors 102 or 202 and one or more memories 104 or 204, and may further include one or more transceivers 106 or 206 and/or one or more antennas 108 or 208. The processors 102 and 202 may control the memories 104 and 204 and/or the transceivers 106 and 206, and may be configured to implement the functions, procedures, and/or methods described/proposed below. For example, the processors 102 and 202 may process information in the memories 104 and 204 to generate first information/signal, and then transmit a wireless signal including the first information/signal through the transceivers 106 and 206. In addition, the processors 102 and 202 may receive a wireless signal including second information/signal through the transceivers 106 and 206, and then store information obtained from signal processing of the second information/signal in the memories 104 and 204. The memories 104 and 204 may be connected to the processors 102 and 202 and store various pieces of information related to the operations of the processors 102 and 202. For example, the memories 104 and 204 may store software code including instructions for performing some or all of the processes controlled by the processors 102 and 202 or for performing the procedures and/or methods described/proposed below. Herein, the processors 102 and 202 and the memories 104 and 204 may be a part of a communication modem/circuit/chip designed to implement wireless communication technology. The transceivers 106 and 206 may be connected to the processors 102 and 202 and transmit and/or receive wireless signals through the one or more antennas 108 and 208. Each of the transceivers 106 and 206 may include a transmitter and/or a receiver.

One or more protocol layers may be implemented by the one or more processors 102 and 202, to which the present disclosure is not limited. For example, the one or more processors 102 and 202 may implement one or more layers (e.g., functional layers such as the physical (PHY) layer, the medium access control (MAC) layer, the radio link control (RLC) layer, the packet data convergence protocol (PDCP) layer, the radio resource control (RRC) layer, and the service data adaption protocol (SDAP)). The one or more processors 102 and 202 may generate one or more protocol data units (PDUs) and/or one or more service data units (SDUs) according to the functions, procedures, proposals, and/or methods described in the present disclosure. The one or more processors 102 and 202 may generate a message, control information, data, or information according to the functions, procedures, proposals, and/or methods described in the present disclosure. The one or more processors 102 and 202 may generate a signal (e.g., a baseband signal) including a PDU, an SDU, a message, control information, data, or information, and provide it to the one or more transceivers 106 and 206 according to the functions, procedures, proposals, and/or methods described in the present disclosure. The one or more processors 102 and 202 may receive a signal (e.g., a baseband signal) from the one or more transceivers 106 and 206, and obtain a PDU, an SDU, a message, control information, data, or information according to the functions, procedures, proposals, and/or methods described in the present disclosure.

The one or more processors 102 and 202 may be referred to as controllers, microcontrollers, microprocessors, or microcomputers. The one or more processors 102 and 202 may be implemented in hardware, firmware, software, or a combination thereof, and the firmware or software may be implemented to include a module, a procedure, a function, and the like. The firmware or software configured to perform the functions, procedures, proposals, and/or methods described in the present disclosure may be included in the one or more processors 102 and 202 or stored in the one or more memories 104 and 204 and driven by the one or more processors 102 and 202. The functions, procedures, proposals, and/or methods described in the present disclosure may be implemented using firmware or software in the form of code, an instruction, and/or a set of instructions.

The one or more memories 104 and 204 may be connected to the one or more processors 102 and 202 and store various types of data, signals, messages, information, programs, code, directions, and/or instructions. The one or more memories 104 and 204 may be located inside and/or outside the one or more processors 102 and 202. Further, the one or more memories 104 and 204 may be connected to the one or more processors 102 and 202 through various technologies such as wired or wireless connections.

The one or more transceivers 106 and 206 may transmit/receive user data, to/from one or more other devices, control information, wireless signals/channels, and the like mentioned in the methods and/or operational flowcharts of the present disclosure. Additionally, the one or more processors 102 and 202 may control the one or more transceivers 106 and 206 to transmit/receive user data, control information, or wireless signals to/from one or more other devices. Further, the one or more transceivers 106 and 206 may be connected to the one or more antennas 108 and 208 and configured to transmit and/or receive user data, control information, wireless signals/channels, and the like, mentioned in the functions, procedures, proposals, methods, and/or operational flowcharts described in the present disclosure, through the one or more antennas 108 and 208. In the present disclosure, the one or more antennas may be multiple physical antennas or multiple logical antennas (e.g., antenna ports). The one or more transceivers 106 and 206 may convert the received wireless signals/channels from RF band signals to baseband signals in order to process the received user data, control information, wireless signals/channels, and the like, using the one or more processors 102 and 202. The one or more transceivers 106 and 206 may convert the user data, control information, wireless signals/channels, and the like, processed using the one or more processors 102 and 202, from baseband signals to RF band signals. For this purpose, the one or more transceivers 106 and 206 may include an analog oscillator and/or a filter.

In the present disclosure, the at least one memory 104 or 204 may store instructions or programs that, when executed, may cause the at least one processor 102 or 202 operably connected to the at least one memory to perform operations according to some implementations or implementations of the present disclosure.

In the present disclosure, a non-transitory computer-readable storage medium may store at least one instruction or computer program that, when executed by at least one processor, may cause the at least one processor to perform operations according to some implementations or implementations of the present disclosure.

FIG. 3 illustrates an example of a frame structure available in a 3GPP wireless communication system.

The frame structure in FIG. 3 is merely an example, and the number of subframes, the number of slots, and the number of symbols in a frame may vary. In some wireless communication systems, different OFDM numerologies (e.g., subcarrier spacings (SCSs)) may be configured between a plurality of cells aggregated for one UE. Accordingly, the duration (in absolute time) of a time resource (e.g., subframe, slot, or transmission time interval (TTI)) composed of the same number of symbols may be configured differently between the aggregated cells. Herein, a symbol may include an OFDM symbol (or cyclic prefix-orthogonal frequency division multiplexing (CP-OFDM) symbol) or an SC-FDMA symbol (or discrete Fourier transform-spread-OFDM (DFT-s-OFDM) symbol). In the present disclosure, the terms symbol, OFDM-based symbol, OFDM symbol, CP-OFDM symbol, and DFT-s-OFDM symbol may be used interchangeably.

Referring to FIG. 3, UL and DL transmissions are organized into frames. Each frame has a duration of T_{f}= (△fₘₐₓ*N_{f}/100)*T_{c}=10ms, where a basic time unit T_{c}=1/(△fₘₐₓ*N_{f}), and △fₘₐₓ=480*10³Hz, and N_{f}=4096. For reference, a sampling time Tₛ=1/(△f_{ref}*N_{f,ref}) where △f_{ref}=15*10³Hz and N_{f,ref}=2048. T_{c} and Tₛ have a relationship of a constant κ=Tₛ/T_{c}=64. A frame includes 10 subframes, and the duration T_{sf} of a single frame is 1ms. A subframe is further divided into slots, and the number of slots within a subframe depends on an SCS. Each slot may include *N*^{slot}_{symb} symbols based on a cyclic prefix (CP). For example, in some scenarios, each slot includes 14 OFDM symbols in the case of a normal CP, and 12 OFDM symbols in the case of an extended CP. The numerology depends on an exponentially scalable SCS, △f2^{u}*15kHz. The following table illustrates the number *N*^{slot}_{symb} of OFDM symbols per slot, the number *N*^{frame,u}ₛₗₒₜ of slots per frame, and the number *N*^{subframe,u}ₛₗₒₜ of slots per subframe, for the normal CP.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The following table illustrates the number of OFDM symbols per slot, the number of slots per frame, and the number of slots per subframe according to an SCS, △f=2^{u}*15kHz, for the extended CP.

**[Table 2]**

| *u* | *N*^{slot}_{symb} | *N*^{frame,u}ₛₗₒₜ | *N*^{subtrame,u}ₛₗₒₜ |
|---|---|---|---|
| 2 | 12 | 40 | 4 |

For an SCS u, slots are numbered by n^{u}ₛ ∈ {0, ..., n^{subframe,u} ₛₗₒₜ-1} in ascending order within a subframe, and by ^{u}_{s,f} ∈ {0, ..., n^{frame,u} ₛₗₒₜ-1} in ascending order within a frame.

While the implementations of the present disclosure are described using a slot as a minimum time unit for scheduling UL, DL, and SL transmissions, the minimum time unit for scheduling may be referred to by a different term depending on a wireless communication system. For example, the minimum time unit for scheduling a transmission is referred to as a subframe or TTI in an LTE system, whereas the minimum time unit for scheduling is referred to as a slot in an NR system.

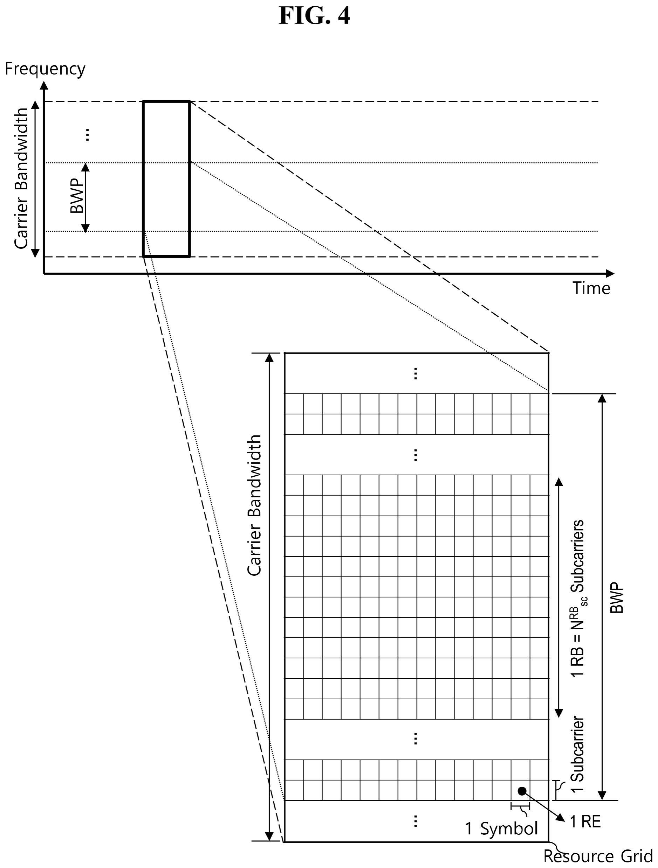

FIG. 4 illustrates a resource grid for the duration of a slot. A slot includes a plurality of (e.g., *N*^{slot}_{symb}) symbols in the time domain. For each numerology (e.g., SCS) and carrier, a resource grid of *N*^{size,u}_{grid,x}* *N*^{RB} _{sc} subcarriers by *N*^{subframe,u}_{symb} OFDM symbols is defined, starting from a common resource block (CRB), *N*^{start,u}_{grid} indicated by higher layer signaling (e.g., RRC signaling). Herein, *N*^{size,u}_{grid,x} is the number of resource blocks (RBs) in the resource grid, and the subscript x is DL for a DL and UL for a UL. *N*^{RB}_{sc} is the number of subcarriers per RB, and in the 3GPP wireless communication system, *N*^{RB}_{sc} is typically 12. For a given antenna port *p,* an SCS configuration *u,* and a transmission direction (DL or UL), there is one resource grid. A carrier BW, *N*^{size,u}_{grid} for the SCS configuration u is given to the UE by a higher layer parameter (e.g., RRC parameter) from the network. Each element in the resource grid for the antenna port p and the SCS configuration u is referred to as an RE, and one complex-valued symbol may be mapped to each RE. Each RE in the resource grid is uniquely identified by an index k in the frequency domain and an index *l* indicating a symbol position relative to a reference point in the time domain. RBs may be classified into common resource blocks (CRBs) and physical resource blocks (PRBs). CRBs are numbered upwards from 0 in the frequency domain for the SCS configuration *u.* The center of subcarrier 0 of CRB 0 for the SCS configuration *u* coincides with 'point A', which is a common reference point for RB grids. PRBs for the SCS configuration u are defined within a bandwidth part (BWP) and numbered from 0 to *N*^{size,u}_{BWP,i}-1 where i is the number of the BWP. The relationship between CRB n^{u}_{CRB} and PRB n_{PR} within BWP i is as follows: n^{u}_{PRB=}n^{u}_{CRB}+*N*^{start,u}_{BWP,i} where *N*^{start,u}_{BWP,i} is a CRB in which the BWP starts relative to CRB 0. A BWP includes a plurality of contiguous RBs in the frequency domain. For example, a BWP is a subset of contiguous CRBs defined for a given numerology uᵢ within BWP i on a given carrier. A carrier may include up to N (e.g., 5) BWPs. The UE may be configured to have one or more BWPs in a given CC. Data communication may be performed in an activated BWP, and only a predetermined number of (e.g., 1) BWPs configured for the UE may be activated on the carrier.

In the 3GPP system, a control resource set (CORESET), which is a set of time-frequency resources where the UE may monitor a PDCCH, may be defined and/or configured. One or more CORESETs may be configured for the UE. A CORESET has a duration of 1 to 3 OFDM symbols and includes a set of PRBs. The PRBs included in the CORESET and the duration of the CORESET may be provided to the UE through higher layer signaling (e.g., RRC signaling). A set of PDCCH candidates within the configured CORESET(s) are monitored according to corresponding search space sets. In the present disclosure, monitoring implies decoding (also known as blind decoding) each PDCCH candidate according to monitored DCI formats. A master information block (MIB) on the PBCH provides the UE with parameters (e.g., CORESET#0 configuration) for monitoring a PDCCH that schedules a PDSCH carrying system information block 1 (SIB1). The PBCH may also indicate that there is no associated SIB1. In this case, another frequency in which an SSB associated with SIB1 is to be searched for as well as a frequency range where the UE may assume no SSB is associated with SIB1 may be indicated to the UE. CORESET#0, which is a CORESET for scheduling at least SIB1, may be configured by the MIB or dedicated RRC signaling.

A set of PDCCH candidates monitored by the UE are defined in terms of PDCCH search space sets. A search space set may be a common search space (CSS) set or a UE-specific search space (USS) set. Each CORESET configuration is associated with one or more search space sets, and each search space set is associated with one CORESET configuration.

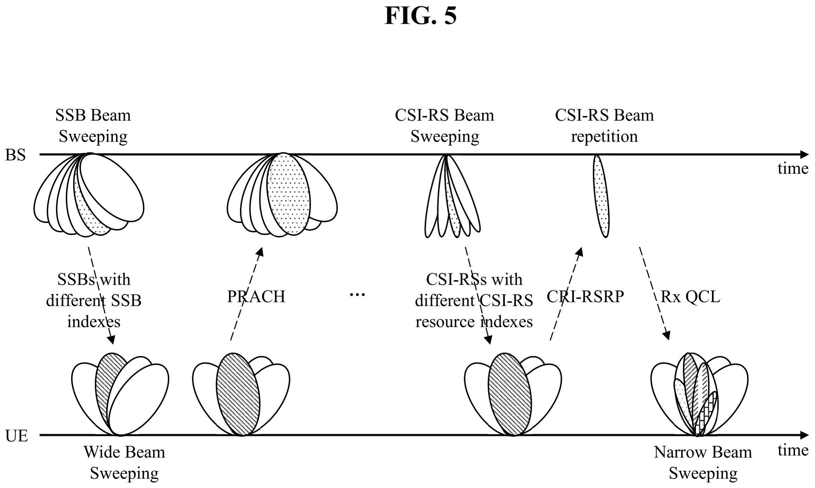

FIG. 5 illustrates a multi-beam operation in a 3GPP system.

5G and a 3GPP system beyond 5G may use an ultra-high frequency band, for example, a millimeter wave frequency band of 6GHz or more, to maintain a high transmission rate for multiple users by using a wide frequency band. However, the millimeter wave frequency band has the frequency characteristic that signal attenuation rapidly increases with a distance due to the use of too high a frequency band. Therefore, when using a band of at least 6GHz, the 3GPP system uses a narrow beam transmission technique which solves the problem of reduced coverage caused by rapid propagation attenuation by concentrating signal energy in a specific direction, instead of an omnidirectional transmission, to compensate for the rapid propagation attenuation. However, when a service is provided using only one narrow beam, an area covered by one BS becomes narrow, and thus the BS aggregates multiple narrow beams to provide a service with a wide beam.

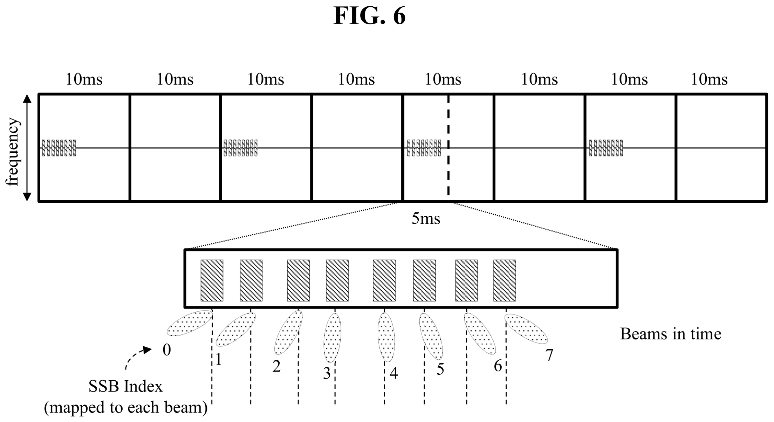

FIG. 6 illustrates an example of transmitting SS/PBCH blocks (SSBs) on a cell.

In the 3GPP system, each SSB is associated with a beam. For example, during a half frame, different SSBs may be transmitted in different spatial directions (using different beams that span the coverage area of a cell). The possible time positions of SSBs within a half frame are determined by an SCS, and the periodicity of half frames in which the SSBs are transmitted is configured by the network. Multiple SSBs may be transmitted within the frequency span of a carrier. Different indexes of SSBs transmitted/detected on one cell may correspond to different BS (wide) transmission (Tx) beams. In the 3GPP system, a multi-beam operation is based on beam switching/beam scanning in which signals are transmitted/received by changing beam directions over time. For example, assuming that the BS supports up to N Tx beams, it may perform beam sweeping by transmitting an SSB including a PSS, an SSS, and a PBCH in each of up to N beam directions (refer to SSB beam sweeping in FIG. 5). A set of SSBs within a beam-sweep is specifically referred to as an SS burst set or SS burst. The number of SSBs within an SS burst set represents the number of beams for the beam-sweep. Multiple SSB patterns are defined depending on a frequency band and an SCS. In the present disclosure, an SSB pattern is also referred to as an SSB occasion pattern. For a half frame including SSBs, first (OFDM) symbol indexes s for candidate SSBs may be determined as follows, according to the SCS of the SSBs, where index 0 corresponds to the first symbol of the first slot within the half frame. In some scenarios, SSB patterns in the following table may be used.

**[Table 3]**

| SCS | OFDM symbol(s) | FR1 <= 3GHz | 3 GHz < FR1 <= 6 GHz | FR2 |
|---|---|---|---|---|
| Case A : 15 kHz SCS | {2, 8} + 14*n | n = 0, 1 | n = 0, 1, 2, 3 | |
| | | s = 2, 8, 16, 22 | s = 2, 8, 16, 22, 30, 36, 44, 50 | |
| Case B : 30 kHz SCS | {4, 8, 16, 20} + 28*n | n = 0 | n = 0, 1 | |
| | | s = 4, 8, 16, 20 | s = 4, 8, 16, 20, 32, 36, 44, 48 | |
| Case C : 30 kHz SCS | {2, 8} + 14*n | n = 0, 1 | n = 0, 1, 2, 3 | |
| | | s = 2, 8, 16, 22 | s = 2, 8, 16, 22, 30, 36, 44, 50 | |
| Case D : 120 kHz SCS | {4, 8, 16, 20} + 28*n | | | n = 0, 1, 2, 3, 5, 6, 7, 8, 10, 11, 12, 13, 15, 16, 17, 18 |
| | | | | s = 4, 8, 16, 20, 32, 36, 44, 48, 60, 64, 72, 76, 88, 92, 100, 104, 144, 148, 156, 160, 172, 176, 184, 188, 200, 204, 212, 216, 228, 232, 240, 244, 284, 288, 296, 300, 312, 316, 324, 328, 340, 344, 352, 356, 368, 372, 380, 384, 424, 428, 436, 440, 452, 456, 464, 468, 480, 484, 492, 496, 508, 512, 520, 524 |
| Case E : 240 kHz SCS | {8, 12, 16, 20, 32, 36, 40, 44} + 56*n | | | n = 0, 1, 2, 3, 5, 6, 7, 8 |
| | | | | s = 8, 12, 16, 20, 32, 36, 40, 44, 64, 68, 72, 76, 88, 92, 96, 100, 120, 124, 128, 132, 144, 148, 152, 156, 176, 180, 184, 188, 200, 204, 208, 212, 288, 292, 296, 230, 312, 316, 320, 324, 344, 348, 352, 356, 368, 372, 376, 380, 400, 404, 408, 412, 424, 428, 432, 436, 456, 460, 464, 468, 480, 484, 488, 492 |

In the above table, FR represents a frequency range. For example, FR1 may correspond to a frequency range of 410MHz to 7125MHz, and FR2 may correspond to a frequency range of 24250MHz to 52600MHz. As noted from the above table, the number of SSBs within an SS burst set may differ depending on a frequency range and an SCS. The number of candidate SSBs within a half frame may be indexed from 0 to L'ₘₐₓ-1 in ascending order in time. If Lₘₐₓ is the maximum number of SSB indexes in a cell or the maximum number of SSBs transmitted within a half frame, L'ₘₐₓ = Lₘₐₓ for an operation without shared spectrum channel access. For an operation with shared spectrum channel access, L'ₘₐₓ and Lₘₐₓ may be different. For example, in the case of an operation with shared spectrum channel access in FR1, it may be defined that Lₘₐₓ = 8 for L' ₘₐₓ = 10 and SSBs with a 15-kHz SCS and for L' ₘₐₓ= 20 and SSBs with a 30-kHz SCS.

SSB(s) are transmitted periodically with a periodicity of 5ms to up to 160ms. A UE performing initial access to the network assumes 20ms (e.g., two frames). In other words, for initial cell access, the UE may assume that a half frame including SSBs occurs with a periodicity of two frames.

Referring again to FIG. 5, the UE may measure the power of SSB(s) received from BS Tx beams by using a wide reception (Rx) beam and select its preferred beam. For example, the UE may select one SSB among the detected/received SSBs. The 3GPP system specifies specific mapping between SSBs and random access channel (RACH) occasions to allow the network to identify which beam the UE has selected. An RACH occasion is time and frequency resources available for transmission of an RACH preamble. Information about how many SSBs may be mapped to one RACH occasion and how many preamble indexes may be mapped to a single SSB may be provided to the UE by the network. For example, when the network configures the number of SSBs per RACH occasion as 1/N, one SSB is associated with N RACH occasions (where N is a positive integer), and when the network configures the number of SSBs per RACH occasion as N, N preamble indexes are mapped to a single SSB. The UE selects an SSB among the SSBs detected/received on the cell, and selects an RACH occasion based on the selected SSB, for transmission. The BS may determine which SSB was selected by the UE among the SSBs transmitted on the cell by detecting an RACH occasion including a PRACH from the UE, through BS Rx beam sweeping. The BS may determine a BS Tx beam for communication with the UE, based on the SSB selected by the UE.

For finer beam tuning, a CSI-RS may be transmitted. The BS may perform beam refinement using CSI-RS transmissions in narrower beams around the BS Tx beam which has been determined based on the RACH occasion where the PRACH from the UE was detected (refer to CSI-RS beam sweeping in FIG. 5). The UE may measure the power of the CSI-RSs received on these BS Tx narrow beams and report a preferred one of the BS Tx narrow beams to the BS. For example, the UE may measure CSI-RSs in CSI-RS resources, select at least one CSI-RS resource, and report a CSI-RS resource indicator (CRI) for the selected CSI-RS resource and its corresponding reference signal received power (RSRP) to the BS. The BS may determine a BS Tx narrow beam based on the CRI and/or the RSRP reported by the UE, and repeatedly transmit the CSI-RS on the BS Tx narrow beam (refer to P3 CSI-RS beam sweeping in FIG. 5) to allow the UE to perform Rx beam sweeping for detecting an appropriate UE Rx beam. The UE may detect an appropriate UE Rx beam by measuring the power of a CSI-RS received on each of its UE Rx beams.

The UE may detect a beam failure using a CSI-RS/SSB. For example, when the L1-RSRP of a beam to be connected drops below a specific limit, the UE determines a beam failure and searches for another candidate beam with good quality. When a predefined number of beam failures are detected, a beam failure recovery (BFR) procedure may be triggered with the candidate beam. The network may provide the UE with the identifier (ID) of an SSB transmitted by the cell, which is used to determine the candidate beam for BFR, and a preamble index which is used for performing BFR, when the candidate beam identified by the SSB is selected. Upon occurrence of the predefined number of beam failures, the UE transmits a BFR request to the network by transmitting a PRACH associated with the SSB ID, and the network provides a random access response (RAR) for the BFR request to the UE.

When receiving a PDSCH, the UE may assume that the DM-RS port of the PDSCH is quasi co-located (QCLed) with an associated SSB, in relation to the Doppler shift, Doppler spread, average delay, delay spread, and spatial Rx parameters. A transmission configuration indicator (TCI) state may be configured/indicated for a PDCCH/PDSCH. The TCI state may include quasi co-location (QCL) information. For example, the UE may be configured with M TCI-state configurations provided by higher layer parameters from the BS, so that the UE may decode a PDSCH according to a detected PDCCH with DCI for a given serving cell. Each TCI-state includes parameters that establish a QCL relationship between one or two DL RSs and the DM-RS ports of the PDSCH, the DM-RS ports of the PDCCH, or the CSI-RS port(s) of CSI-RS resources. The QCL relationship is configured by a higher layer parameter qcl-type1 for a first DL RS and (if configured) a higher layer parameter qcl-type2 for a second DL RS. A QCL type corresponding to each DL RS is given by a higher layer parameter qcl-type within QCL-Info and may have one of the following values:
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

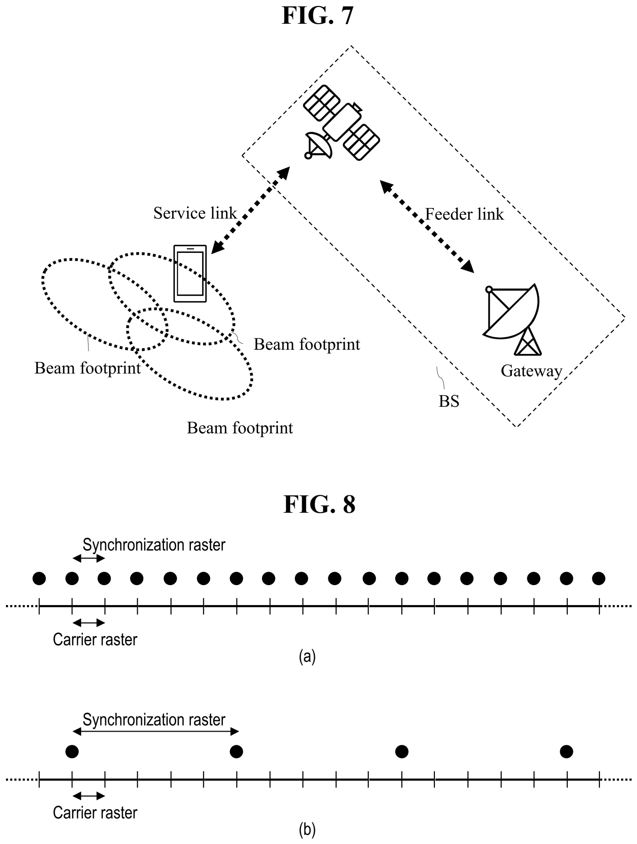

FIG. 7 illustrates a non-terrestrial network (NTN) structure.

Discussions have recently been underway to enable the 3GPP system to support an NTN. An NTN is any network including non-terrestrial flying objects. When wireless communication through an NTN is available in the 3GPP system, the continuity of a wireless communication service may be guaranteed, the reliability of the wireless communication service may be strengthened through connectivity between various access technologies, and network resilience and reliability against disasters may be enhanced. For convenience of description, the following terms are used.
- NTN: A wireless access network including BSs, which provides non-terrestrial radio access to UEs by using an NTN payload mounted on an airborne or space-borne NTN vehicle, and an NTN gateway.
- NTN Gateway: An earth station located on the surface of the earth, which provides connectivity to the NTN payload by using a feeder link. The NTN gateway is a transport network layer (TNL) node.
- NTN Payload: A network node mounted on a satellite or high altitude platform station providing a satellite or high altitude platform connection, which provides connectivity functionalities between a service link and a feeder link.
- Service Link: A wireless link between the NTN payload and the UE.
- Feeder Link: A wireless link between the NTN gateway and the NTN payload.
- Satellite: A space-borne vehicle orbiting the earth while carrying the NTN payload.
- NTN Cell: A cell that provides the service link between the UE and the NTN payload.

Referring to FIG. 7, an NTN gateway is connected to an NTN payload mounted on a satellite or a high altitude platform system (HAPS) via a feeder link. The NTN payload is connected to a UE via a service link. The NTN gateway may be connected to the core network of a 3GPP system.

The NTN payload transfers a wireless protocol received from the UE via the service link to the NTN gateway via the feeder link, and transfers a wireless protocol received from the NTN gateway via the feeder link to the UE via the service link. The NTN gateway may service multiple NTN payloads, and an NTN payload may be serviced by multiple NTN gateways. For an NTN, a tracking area may correspond to a fixed geographical area, and mapping between them may be configured by a wireless access network.

The following three types of service links are supported:
- Earth-fixed Service Link: A service link provided by beam(s) that continuously cover the same geographical areas all the time (e.g., for GEO satellites).
- Quasi-Earth-fixed Service Link: A service link provided by beam(s) that cover one geographical area for a limited period and another geographical area for another period (e.g., for NGSO satellites generating steerable beams).
- Earth-moving Service Link: A service link provided by beam(s) whose coverage area slides over the surface of the earth (e.g., for NGSO satellites generating fixed or non-steerable beams).

An NTN may include a satellite communication network, an air-to-ground network, a UAV network, and the like. One of the main concepts of the NTN is that NTN cells are provided from non-geostationary orbit (NGSO) satellites that periodically orbit around the earth. Each satellite has its own orbital trajectory, which is included in satellite ephemeris information. Based on the satellite ephemeris information, the network may predict feeder link switchover, manage UE mobility, and perform radio resource control. A BS providing NTN access may broadcast orbital trajectory information or ephemeris information related to coordinates for the NTN payload. EphemerisInfo may provide a satellite ephemeris in the format of position and velocity state vectors or in the format of orbital parameters. The following tables illustrate an EphemerisInfo information element (IE) broadcast by the BS and the descriptions of the fields of the EphemerisInfo IE.

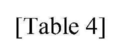

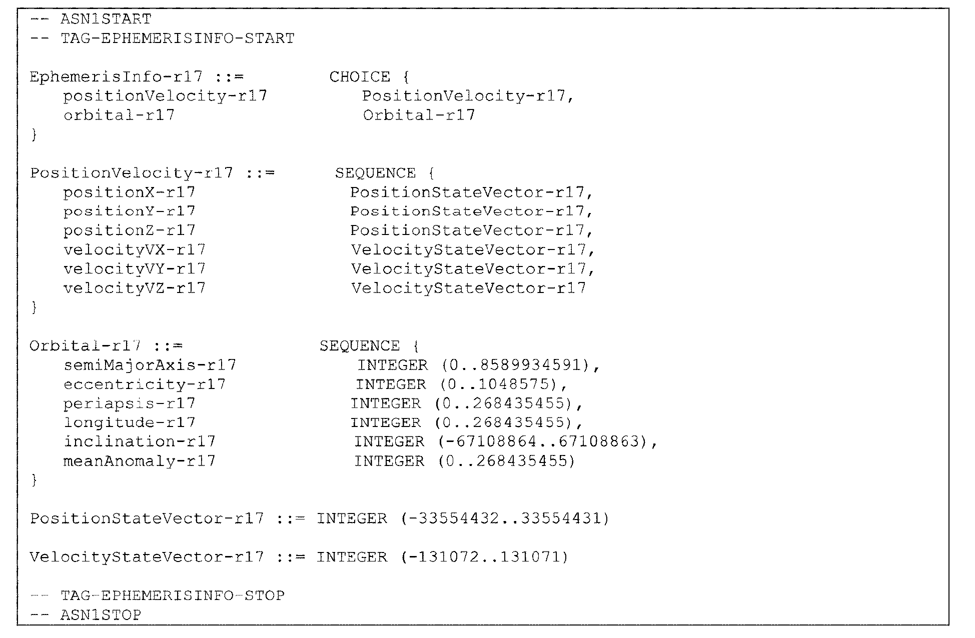

**[Table 5]**

| ***Ephemerisinfo* field descriptions** |
|---|
| ***eccentricity*** |
| Satellite orbital parameter: eccentricity e, see NIMA TR 8350.2 [71]. Unit is radian. |
| Step of 1.431 * 10⁻⁸. Actual value = field value * (1.431 * 10⁻⁸). |
| ***inclination*** |
| Satellite orbital parameter: inclination i, see NIMA TR 8350.2 [71]. Unit is radian. |
| Step of 2.341* 10⁻⁸ rad. Actual value = field value * (2.341* 10⁻⁸). |
| ***longitude*** |
| Satellite orbital parameter: longitude of ascending node Ω, see NIMA TR 8350.2 [71]. Unit is radian. |
| Step of 2.341* 10⁻⁸ rad. Actual value = field value * (2.341* 10⁻⁸). |
| ***meanAnomaly*** |
| Satellite orbital parameter: Mean anomaly M at epoch time, see NIMA TR 8350.2 [71]. Unit is radian. |
| Step of 2.341* 10⁻⁸ rad. Actual value = field value * (2.341* 10⁻⁸). |
| ***ZZperiapsis*** |
| Satellite orbital parameter: argument of periapsis ω, see NIMA TR 8350.2 [71]. Unit is radian. |
| Step of 2.341* 10⁻⁸ rad. Actual value = field value * (2.341* 10⁻⁸). |
| ***positionX, positionY, positionZ*** |
| X, Y, Z coordinate of satellite position state vector in ECEF. Unit is meter. |
| Step of 1.3 m. Actual value = field value * 1.3. |
| ***semiMajorAxis*** |
| Satellite orbital parameter: semi major axis α, see NIMA TR 8350.2 [71]. Unit is meter. |
| Step of 4.249 * 10⁻³ m. Actual value = 6500000 + field value * (4.249 * 10⁻³). |
| ***velocityVX, velocityVY, velocityVZ*** |
| X, Y, Z coordinate of satellite velocity state vector in ECEF. Unit is meter/second. |
| Step of 0.06 m/s. Actual value = field value * 0.06. |

Satellite communication networks may include low earth orbit (LEO) satellites, medium earth orbit (MEO) satellites, and geosynchronous earth orbit (GEO) satellites as follows.

**[Table 6]**

| **Platforms** | **Altitude range** | **Orbit** | **Typical beam footprint size** |
|---|---|---|---|
| Low-Earth Orbit (LEO) | 300 - 1500 km | Circular around the earth | 100 - 1000 km |
| Medium-Earth Orbit (MEO) | 7000 - 25000 km | | 100 - 1000 km |
| Geostationary Earth Orbit (GEO) | 35786 km | National station keeping position fixed | 200 - 2500 km |

NTN deployment scenarios are given as follows.

**[Table 7]**

| **Main attributes** | **Deployment-D1** | **Deployment-D2** | **Deployment-D3** | **Deployment-D4** | **Deployment-D5** |
|---|---|---|---|---|---|
| Platform orbit and altitude | GEO at 35 786 km | GEO at 35 786 km | Non-GEO down to 600 km | Non-GEO down to 600 km | UAS between 8 km and 50 km including HAPS |
| Carrier Frequency on the link between Air / space-borne platform and UE | Around 20 GHz for DL | Around 2 GHz for both DL and UL (S band) | Around 2 GHz for both DL and UL (S band) | Around 20 GHz for DL | Below and above 6 GHz |
| | Around 30 GHz for UL (Ka band) | | | Around 30 GHz for UL (Ka band) | |
| Beam pattern | Earth fixed beams | Earth fixed beams | Moving beams | Earth fixed beams | Earth fixed beams |

FIG. 8 illustrates synchronization rasters and channel rasters used in some implementations.

A UE attempting to access a network performs cell search, which is a process in which the UE acquires time and frequency synchronization with a cell and detects the physical layer cell identity (PCI) of the cell. During cell search operations that the UE performs upon power-on, the UE acquires information required to access the cell using an SSB. The UE performing cell search attempts to detect the SSB by moving in the frequency domain, assuming a synchronization raster. The synchronization raster indicates the possible frequency positions of the SSB that the UE may use to acquire system information, when the position of the SSB is not explicitly signaled. In LTE, the frequency-domain position of the PSS/SSS is always fixed around the center frequency of a carrier (see FIG. 8(a)). In contrast, in NR, a set of possible frequency positions for the SSB is defined based on a frequency band, which is referred to as a synchronization raster, and the UE needs to search for the SSB based on the synchronization raster. Unlike in LTE where the UE searches for the PSS/SSS at all carrier raster positions, a sparser synchronization raster is defined for the UE in NR (see FIG. 8(b)). Therefore, in NR, the UE only needs to search for the SSB on the sparser synchronization raster than in LTE. A carrier raster is also called a channel raster, and the channel raster indicates possible carrier positions. A global frequency channel raster defines a set of radio frequency (RF) frequencies F_{REF}. An RF reference frequency is used for signaling to identify the positions of RF channels, SSBs, and other elements. The global frequency raster is used to define all frequencies from 0 to 100GHz. In NR, the RF reference frequencies F_{REF} in MHz may be given using an NR absolute radio frequency channel number (NR-ARFCN) by the following equation: F_{REF}= F_{REF-Offs} + △F_{Global}(N_{REF} - N_{REF-Offs}) where △F_{Global} is the granularity of the frequency raster, N_{REF} is the NR-ARFCN, and F_{REF-Ofs} and N_{REF-Offs} may be given by the following table.

**[Table 8]**

| **Frequency range (MHz)** | **ΔF_{Global} (kHz)** | **F_{REF-Offs} (MHz)** | **N_{REF-Offs}** | **Range of N_{REF}** |
|---|---|---|---|---|
| 0 - 3000 | 5 | 0 | 0 | 0 - 599999 |
| 3000 - 24250 | 15 | 3000 | 600000 | 600000 - 2016666 |

The channel raster defines a subset of RF reference frequencies that may be used to identify an RF channel position on UL and DL.

A global synchronization raster is defined for all frequencies, and the frequency position of an SSB is defined as SS_{REF} with a corresponding global synchronization channel number (GSCN). Parameters that define SS_{REF} and GSCNs for all frequency ranges are defined, for example, in the following table.

**[Tale 9]**

| **Frequency range** | **SS Block frequency position SS_{REF}** | **GSCN** | **Range of GSCN** |
|---|---|---|---|
| 0 - 3000 MHz | N * 1200kHz + M * 50 kHz, N=1:2499, M ∈ {1,3,5} (Note 1) | 3N + (M-3)/2 | 2 - 7498 |
| 3000 - 24250 MHz | 3000 MHz + N * 1.44 MHz | 7499 + N | 7499 - 22255 |
| | N = 0:14756 | | |
| NOTE 1: The default value for operating bands with which only support SCS spaced channel raster(s) is M=3. | | | |

The synchronization raster for each band may be given, for example, by the following table. The distance between applicable GSCN entries may be given by <step size> indicated in the following table.

**[Table 10]**

| **NR operating band** | **SS Block SCS** | **SS Block pattern^{NOTE 1}** | **Range of GSCN (First - <Step size> - Last)** |
|---|---|---|---|
| n1 | 15 kHz | Case A | 5279 - <1> - 5419 |
| n2 | 15 kHz | Case A | 4829 - <1> - 4969 |
| n3 | 15 kHz | Case A | 4517 - <1> - 4693 |
| n5 | 15 kHz | Case A | 2177 - <1> - 2230 |
| | 30 kHz | Case B | 2183 - <1> - 2224 |
| n7 | 15 kHz | Case A | 6554 - <1> - 6718 |
| n8 | 15 kHz | Case A | 2318 - <1> - 2395 |
| n12 | 15 kHz | Case A | 1828 - <1> - 1858 |
| n14 | 15 kHz | Case A | 1901 - <1> - 1915 |
| n18 | 15 kHz | Case A | 2156 -<1> - 2182 |
| n20 | 15 kHz | Case A | 1982 - <1> - 2047 |
| n25 | 15 kHz | Case A | 4829 - <1> - 4981 |
| n26 | 15 kHz | Case A | 2153 -<1>-2230 |
| n28 | 15 kHz | Case A | 1901 - <1> - 2002 |
| n29 | 15 kHz | Case A | 1798 -<1>- 1813 |
| n30 | 15 kHz | Case A | 5879 - <1> - 5893 |
| n34 | 15 kHz | Case A | NOTE 5 |
| | 30 kHz | Case C | 5036 - <1> - 5050 |
| n38 | 15 kHz | Case A | NOTE 2 |
| | 30 kHz | Case C | 6437 - <1> - 6538 |
| n39 | 15 kHz | Case A | NOTE 6 |
| | 30 kHz | Case C | 4712 - <1> - 4789 |
| n40 | 30 kHz | Case C | 5762 - <1> - 5989 |
| n41 | 15 kHz | Case A | 6246 - <3> - 6717 |
| | 30 kHz | Case C | 6252 - <3> - 6714 |
| n46^{NOTE 3} | 30 kHz | Case C | 8993 - <1> - 9530 |
| n48 | 30 kHz | Case C | 7884 - <1> - 7982 |
| n50 | 30 kHz | Case C | 3590 - <1> - 3781 |
| n51 | 15 kHz | Case A | 3572 - <1 > - 3574 |
| n53 | 15 kHz | Case A | 6215 - <1> - 6232 |
| n65 | 15 kHz | Case A | 5279 - <1> - 5494 |
| n66 | 15 kHz | Case A | 5279 - <1> - 5494 |
| | 30 kHz | Case B | 5285 - <1> - 5488 |
| n70 | 15 kHz | Case A | 4993 - <1> - 5044 |
| n71 | 15 kHz | Case A | 1547 - <1> - 1624 |
| n74 | 15 kHz | Case A | 3692 - <1> - 3790 |
| n75 | 15 kHz | Case A | 3584 - <1> - 3787 |
| n76 | 15 kHz | Case A | 3572 - <1> - 3574 |
| n77 | 30 kHz | Case C | 7711 - <1> - 8329 |
| n78 | 30 kHz | Case C | 7711 - <1> - 8051 |
| n79 | 30 kHz | Case C | 8480 - <16> - 8880 |
| n90 | 15 kHz | Case A | 6246 - < 1 > - 6717 |
| | 30 kHz | Case C | 6252 - <1> - 6714 |
| n91 | 15 kHz | Case A | 3572 - <1> - 3574 |
| n92 | 15 kHz | Case A | 3584 - <1> - 3787 |
| n93 | 15 kHz | Case A | 3572 - <1> - 3574 |
| n94 | 15 kHz | Case A | 3584 - <1> - 3787 |
| n96^{NOTE 4} | 30 kHz | Case C | 9531 - <1> - 10363 |

The notes in Table 10 have the following meanings.
- NOTE 1: An SSB pattern is defined in 3GPP TS 38.213.
- NOTE 2: Available SS raster entries are GSCN = {6432, 6443, 6457, 6468, 6479, 6493, 6507, 6518, 6532, 6543}
- NOTE 3: The following GSCNs are allowed for an operation in band n46: GSCN = {8996, 9010, 9024, 9038, 9051, 9065, 9079, 9093, 9107, 9121, 9218, 9232, 9246, 9260, 9274, 9288, 9301, 9315, 9329, 9343, 9357, 9371, 9385, 9402, 9416, 9430, 9444, 9458, 9472, 9485, 9499, 9513}
- NOTE 4: The following GSCNs are allowed for an operation in band n96: GSCN = {9548, 9562, 9576, 9590, 9603, 9617, 9631, 9645, 9659, 9673, 9687, 9701, 9714, 9728, 9742, 9756, 9770, 9784, 9798, 9812, 9826, 9840, 9853, 9867, 9881, 9895, 9909, 9923, 9937, 9951, 9964, 9978, 9992, 10006, 10020, 10034, 10048, 10062, 10076, 10090, 10103, 10117, 10131, 10145, 10159, 10173, 10187, 10201, 10214, 10228, 10242, 10256, 10270, 10284, 10298, 10312, 10325, 10339, 10353}
- NOTE 5: Available SS raster entries are GSCN = {5032, 5043, 5054}
- NOTE 6: Available SS raster entries are GSCN = {4707, 4715, 4718, 4729, 4732, 4743, 4747, 4754, 4761, 4768, 4772, 4782, 4786, 4793}

Referring to Table 9 and Table 10, for band n35, the UE may perform cell search by incrementing a GSCN by 1 each time, starting from GSCN = 6125.

Cell selection is performed based on cell-defining SSBs (CD-SSBs) where the synchronization raster is located. When an SSB is associated with remaining minimum system information (RMSI) (e.g., SIB1), for example, when an MIB carried by the PBCH within the SSB includes parameters for transmission of a PDCCH that schedules the RMSI, the SSB is referred to as a CD-SSB. The UE may search frequency bands, identify the strongest cell based on an SSB for each carrier frequency, and select a cell to perform initial access.

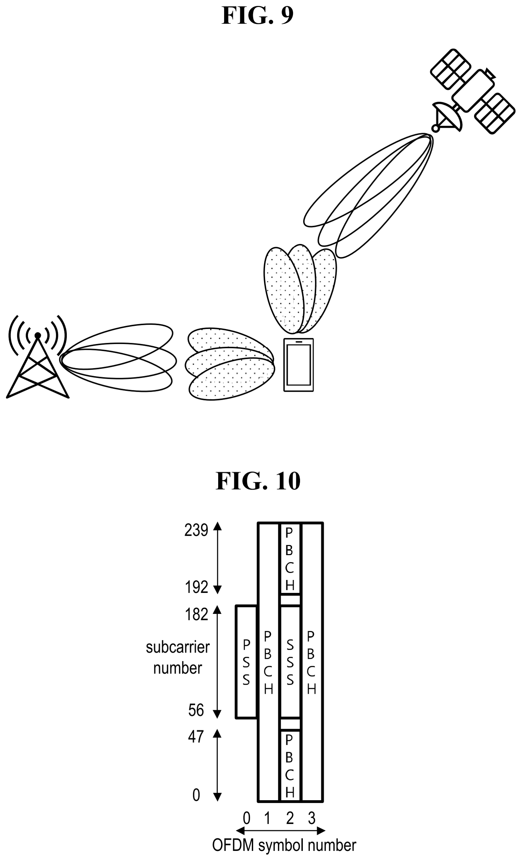

FIG. 9 illustrates a situation where a terrestrial network (TN) and a non-terrestrial network (NTN) coexist.

Referring to FIG. 9, when a UE is served by a TN BS, a UE Rx beam will be directed to the vicinity of the ground, and when the UE is served by an NTN BS, a UE Rx beam will be directed toward the sky. For a frequency band where the NTN and the TN may coexist, the UE has no prior information about BS types during initial access. In this case, since the UE does not know whether its Rx beam for SSB reception should be formed toward the TN-BS or the NTN-BS during initial access, the UE will select an Rx beam direction randomly. When the randomly selected Rx beam direction is inappropriate, more time will be taken for cell search, which may lead to performance degradation. Therefore, a method for distinguishing between an NTN and a TN is required for the coexistence of the NTN and the TN. Implementations of the present disclosure for distinguishing between an NTN and a TN based on an SSB structure will be described below.

FIG. 10 illustrates an SSB structure transmitted by a BS.

Referring to FIG. 10, an SSB transmitted by the BS includes a PSS and an SSS, each occupying 1 OFDM symbol and 127 subcarriers, and a PBCH which spans 3 OFDM symbols and 240 subcarriers, leaving an unused portion in the middle for the SSS in one OFDM symbol.

For reference, considering that the requirements for direct communication between UEs differ from the requirements for communication between a BS and UEs, a sidelink SS and a sidelink PBCH transmitted by the UE have a different structure from the SSB transmitted by the BS. For example, a sidelink synchronization signal transmitted by the UE includes a sidelink PSS (S-PSS) and a sidelink SSS (S-SSS), each occupying 2 OFDM symbols and 127 subcarriers. A physical sidelink broadcast channel (PSBCH) includes an associated DM-RS and occupies 9 and 7 OFDM symbols, respectively, for normal and extended CP cases.

In the NTN, since an SSB is transmitted by a BS mounted on a satellite, the requirements for an NTN SSB and a TN SSB may not be different. Therefore, in some implementations of the present disclosure, it may be assumed that the same type of SSB as that transmitted by the TN BS is also transmitted in the NTN.

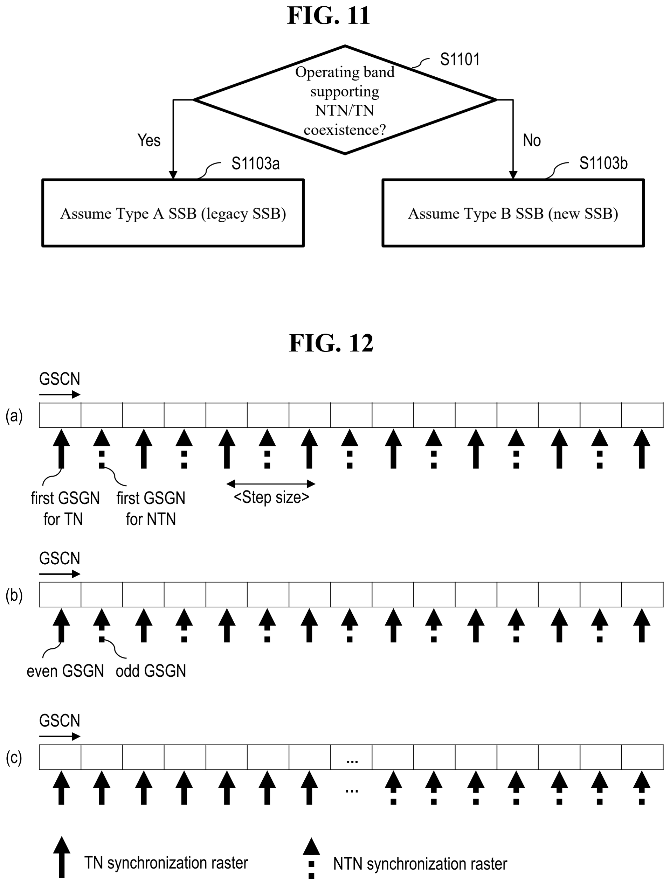

FIG. 11 illustrates part of an SSB reception process according to some implementations of the present disclosure.

A UE attempting SSB detection (for cell search for cell selection/reselection) or a UE performing SSB monitoring for a connected or configured serving cell may attempt SSB detection, assuming a Type A SSB (e.g., refer to the legacy SSB (FIG. 6 and Table 3)) for an operating band supporting the TN only (yes in S1101) (S1103a), and may attempt SSB detection, assuming an SSB (hereinafter, a Type B SSB) according to some implementations of the present disclosure for an operating band where the NTN and the TN coexist (no in S1101) (S1103b). For example, for the frequency band supporting the coexistence between the NTN and the TN, the UE may assume a legacy SSB pattern or a new SSB pattern according to some implementations of the present disclosure. In some implementations of the present disclosure, for candidate SSBs for the TN among candidate SSBs based on the new SSB pattern, the UE may perform monitoring by directing UE Rx beam(s) toward the vicinity of the ground, and for candidate SSBs for the NTN among the candidate SSBs based on the new SSB pattern, the UE may perform monitoring by directing UE Rx beam(s) toward the sky.

FIG. 12 illustrates NTN/TN distinction according to some implementations of the present disclosure.
> Alt 1. An NTN SSB and a TN SSB may be distinguished by different synchronization rasters. For example, a TN-specific synchronization raster and an NTN-specific synchronization raster may be defined. The UE may attempt SSB detection on the TN-specific synchronization raster, using UE Rx beam(s) directed toward the vicinity of the ground, and attempt SSB detection on the NTN-specific synchronization raster, using UE Rx beam(s) directed toward the sky.
   >> Alt 1-1. Synchronization rasters may be defined in different ranges of GSCNs for the NTN and the TN. Referring to FIG. 12(a), the synchronization rasters may be defined by defining different first GSCNs for the NTN and the TN, respectively, for the same operating band, and incrementing a step size by N each time. Referring to Table 10, for example, for operating band n40, a GSCN range of 5762 - <2> - 5989 may be defined for the TN, and a GSCN range of 5763 - <2> - 5989 may be defined as the synchronization raster for the NTN. In some implementations, twice the <step size> defined for each operating band illustrated in Table 10 may be used as the <step size> in Alt 1-1.
   >> Alt 1-2. A synchronization raster for NTN (candidate) SSB(s) and a synchronization raster for TN (candidate) SSB(s) may be distinguished by even and odd GSCNs. Referring to FIG. 12(b), for example, it may be specified that the TN uses the synchronization raster defined on even (or odd) GSCNs, and the NTN uses the synchronization raster defined on odd (or even) GSCNs.
   >> Alt 1-3. A synchronization raster for NTN (candidate) SSB(s) and a synchronization raster for TN (candidate) SSB(s) may use lower (or upper) GSCNs and upper (or lower) GSCNs. Referring to FIG. 12(c), for example, it may be specified that the TN uses the synchronization raster defined on GSCNs belonging to the first half of GSCNs for an operating band, and the NTN uses the synchronization raster defined on GSCNs belonging to the remaining half of the GSCNs for the operating band. Referring to Table 10, for example, it may be specified that out of a GSCN range of 5672 - <1> - 5989 for operating band n40, a GSCN range of <5762> - <1> - 5875 is used for the TN, and a GSCN range of <5876> - <1> - 5989 is used for the NTN.

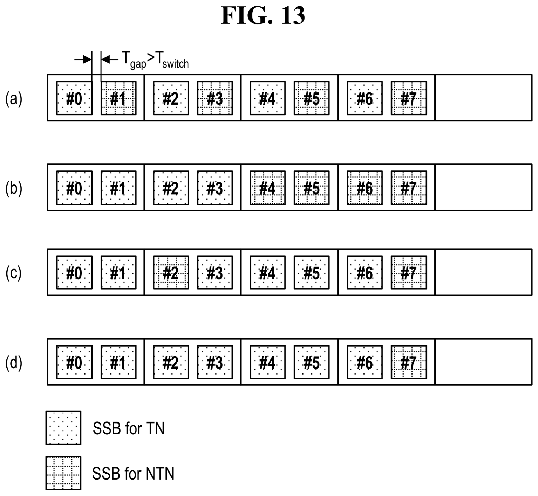

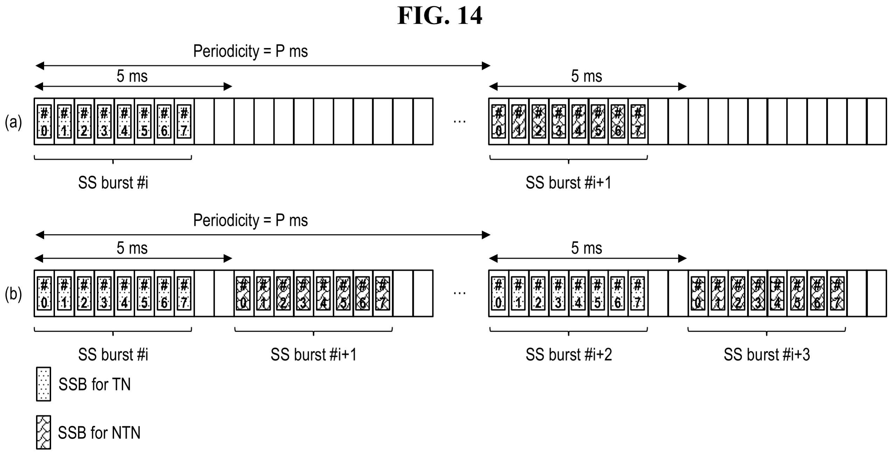

FIGS. 13 and 14 illustrate NTN/TN distinction according to other implementations of the present disclosure. In particular, FIGS. 13 and 14 illustrate some implementations of the present disclosure in which the NTN and the TN are distinguished by different SSB (occasion) patterns.

### > Alt 2-1. SSB-level association

It may be specified that each (candidate) SSB (occasion) within an SS burst is associated with either the NTN or the TN. For example, each (candidate) SSB (occasion) within the SS burst may be associated with the NTN or the TN according to one of the following methods. The UE may attempt SSB detection in candidate SSB occasion(s) for the TN, using UE Rx beam(s) directed toward the vicinity of the ground ,and attempt SSB detection in candidate SSB occasion(s) for the NTN, using UE Rx beam(s) directed toward the sky.

In some implementations, the gap T_{gap} between a TN SSB and an NTN SSB is designed to be greater than a beam switching delay T_{switch} required for beam switching.

In some implementations, the time gap between SSBs transmitted at different times may be designed to have different values depending on whether the SSBs are associated with the TN or the NTN. For example, the gap between a TN SSB and a TN SSB may be designed as T_{gap,1}, the gap between an NTN SSB and an NTN SSB as T_{gap,2}, and the gap between a TN SSB and an NTN SSB as T_{gap,3}. The time gaps between SSBs, T_{gap,1}, T_{gap,2}, and T_{gap,3} may be designed considering beam switching delays, for example, T_{switch,1}, T_{switch,2}, and T_{switch,3} required for the respective situations, respectively.
>> Alt 2-1-1. Each (candidate) SSB (occasion) within an SS burst may be associated with the NTN or the TN based on an even/odd candidate SSB index. Referring to FIG. 13(a), for example, a (candidate) SSB (occasion) with an even candidate SSB index may be specified for the TN, and a (candidate) SSB (occasion) with an odd candidate SSB index may be specified for the NTN, or vice versa.
>> Alt 2-1-2. Each (candidate) SSB (occasion) within an SS burst may be associated with the NTN or the TN based on consecutive SSB parts. Referring to FIG. 13(c), for example, the first Lₘₐₓ/2 consecutive (candidate) SSBs among Lₘₐₓ (candidate) SSBs within an SS burst may be specified for the TN, and the remaining Lₘₐₓ/2 consecutive (candidate) SSBs may be specified for the NTN, or vice versa.

### > Alt 2-2. SS burst-level association

Each SS burst may be associated with either the NTN or the TN. The UE may attempt SSB detection using UE Rx beam(s) directed toward the vicinity of the ground during a period for SS burst(s) for the TN, and attempt SSB detection using UE Rx beam(s) directed toward the sky during a period for SS burst(s) for the NTN.
>> Alt 2-2-1. An SS burst occurs with a specific periodicity, and SS burst association may be specified per period. Referring to FIG. 14(a), for a frequency band defined such that an SS burst is transmitted with a periodicity of P ms, it may be specified that based on the periodicity, a first SS burst occasion is associated with the TN, and a second SS burst occasion is associated with the NTN, so that the TN-associated SS burst and the NTN-associated SS burst alternate. In this case, the TN SS burst and the NTN SS burst each are transmitted with a periodicity of 2*P ms in the frequency band.
>> Alt 2-2-2. Referring to FIG. 14(a), it may be specified that an SS burst in the first half frame of a frame is associated with the TN, and an SS burst in the second half frame of the frame is associated with the NTN, or vice versa. Referring to FIG. 14(b), each of the half frame with the TN SS burst and the other half frame with the NTN SS burst may be transmitted with a periodicity of P ms.

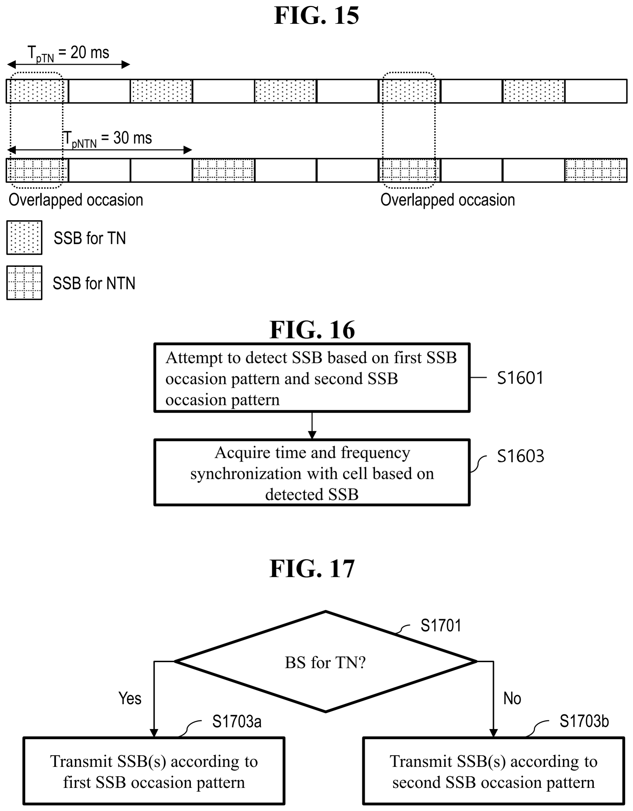

FIG. 15 illustrates NTN/TN distinction according to other implementations of the present disclosure.

### > Alt 3. Use of different SSB transmission periodicities

Two different SSB transmission periodicities may be defined for the TN and the NTN. In FIG. 15, Tₚ^{TN} represents an SSB periodicity for the TN, and Tₚ^{NTN} represents an SSB periodicity for the NTN. When different SSB transmission periodicities are used for the TN and the NTN, TN SSB occasions and NTN SSB occasions may or may not overlap. When a TN SSB occasion and an NTN SSB occasion overlap in time, the following may be considered.
>> Alt 3-1. The TN may be prioritized. Referring to FIG. 15, the UE may attempt SSB detection by prioritizing the TN SSB in an overlapping occasion. For example, when a TN SSB occasion and an NTN SSB occasion overlap in time, the UE may attempt SSB detection using UE Rx beam(s) directed toward the vicinity of the ground.
>> Alt 3-2. The NTN may be prioritized. Referring to FIG. 15, the UE may attempt SSB detection by prioritizing an NTN SSB in an overlapping occasion. For example, when a TN SSB occasion and an NTN SSB occasion overlap in time, the UE may attempt SSB detection using UE Rx beam(s) directed toward the sky.
>> Alt 3-3. It may depend on UE implementation.

Since a UE performing initial cell (re)search does not know a half frame boundary of a cell until it detects an SSB on the cell, it may attempt SSB detection by randomly switching a UE Rx beam. The UE may know the half frame boundary after the SSB is detected in a specific UE Rx beam, and then perform beam refinement to determine a more accurate UE Rx beam. According to Alt 1 described before, the UE may clearly distinguish a TN BS Tx beam and an NTN BS Tx beam using synchronization rasters, and attempt reception of SSB(s) by clearly distinguishing or matching a TN UE Rx beam and an NTN UE Rx beam. Regarding some implementations of Alt 2 or Alt 3 described before, the UE may attempt SSB detection by randomly changing UE Rx beam(s), considering an expected SSB (occasion) pattern until it acquires a frame boundary.

In some implementations of the present disclosure, the UE may detect an SSB and acquire an MIB from a received PBCH, and explicitly acquire information about whether a cell associated with the currently detected SSB is a TN or an NTN as part of the information from the received MIB.

In the TN, there may be various line-of-sight (LOS) and non-line-of-sight (NLOS) paths that DL signals may experience due to various terrains and objects on the ground. Therefore, the BS may need to transmit SSBs using various beams. In contrast, in the NTN, communication services are provided to a UE on the ground by a BS in the sky, and thus the number of paths that DL signals may experience may be smaller than in the TN environment. Therefore, the NTN may require a smaller number of BS Tx beams for an appropriate communication service than the TN. Therefore, in some implementations of the present disclosure described above, the maximum number L_{max_TN} of candidate SSBs for the TN and the maximum number L_{max_NTN} of candidate SSBs for the NTN within each SS burst (also called SSB (occasion) pattern) may be different.

In some implementations of the present disclosure, when it is said that a UE or a BS transmits a signal/channel with a Tx beam, this may imply that the UE or the BS transmits the signal/channel with a spatial domain transmission filter. In some implementations of the present disclosure, when it is said that a UE or a BS receives a signal/channel with an Rx beam, this may imply that the UE or the BS receives the signal/channel using a spatial domain reception filter. For example, transmission using the same Tx beam may mean transmission using the same spatial domain transmission filter, and reception using the same Rx beam may mean reception using the same spatial domain reception filter.

FIG. 16 illustrates part of a DL reception flow according to some implementations of the present disclosure.

In relation to reception of a DL signal, a UE may perform operations according to some implementations of the present disclosure. The UE may include at least one transceiver, at least one processor, and at least one computer memory operably connectable to the at least one processor and storing instructions that, when executed, cause the at least one processor to perform operations according to some implementations of the present disclosure. A processing device for a UE may include at least one processor, and at least one computer memory operably connectable to the at least one processor and storing instructions that, when executed, cause the at least one processor to perform operations according to some implementations of the present disclosure. A (non-transitory) computer-readable storage medium may store at least one computer program including instructions that, when executed by at least one processor, cause the at least one processor to perform operations according to some implementations of the present disclosure. A computer program or computer program product may be recorded on at least one (non-transitory) computer-readable storage medium and include instructions that, when executed, cause (at least one processor) to perform operation according to some implementations of the present disclosure. In the UE, the processing device, the (non-transitory) computer-readable storage medium, and/or the computer program product, the operations may include attempting to detect an SSB on a first frequency band supporting both a TN and an NTN (S1601), and acquiring time and frequency synchronization with a cell based on detection of an SSB on the cell (S1603). In some implementations, the UE may transmit a PRACH based on the SSB. Attempting to detect the SSB on the first frequency band may include attempting SSB detection based on a first SSB occasion pattern defined for the TN, and attempting SSB detection based on a second SSB occasion pattern defined for the NTN, and the second SSB occasion pattern may include a smaller number of SSB occasions than the number of SSB occasions in the first SSB occasion pattern (S1603). The first SSB occasion pattern may correspond to a set of SSBs for the TN within a half frame or an SS burst, a SS burst for the TN, or an SSB periodicity for the TN.

In some implementations, attempting SSB detection based on the first SSB occasion pattern may be performed on a first synchronization raster defined for the TN. In some implementations, attempting SSB detection based on the second SSB occasion pattern may be attempted on a second synchronization raster defined for the NTN.

In some implementations, each SSB occasion within the first SSB occasion pattern and the second SSB occasion pattern may correspond to a (candidate) SSB (or a (candidate) SSB index) within an SS burst transmitted with a predetermined periodicity.

In some implementations, the SSB occasions within the first SSB occasion pattern may be associated respectively with (candidate) SSBs (or (candidate) SSB indexes) within a first SS burst, and the SSB occasions within the second SSB occasion pattern may be associated respectively with (candidate) SSBs (or (candidate) SSB indexes) within a second SS burst. In some implementations, the first SS burst and the second SS burst may exist in different half frames.

In some implementations, the first SSB occasion pattern may have a first periodicity, and the second SSB occasion pattern may have a second periodicity longer than the first periodicity.

In some implementations, the operations may include attempting SSB detection based on a third SSB occasion pattern on a second frequency band that does not support the NTN.

FIG. 17 illustrates part of a DL transmission flow according to some implementations of the present disclosure.

In relation to transmission of a DL signal, a BS may perform operations according to some implementations of the present disclosure. The BS may include at least one transceiver, at least one processor, and at least one computer memory operably connectable to the at least one processor and storing instructions that, when executed, cause the at least one processor to perform operations according to some implementations of the present disclosure. A processing device for a BS may include at least one processor, and at least one computer memory operably connectable to the at least one processor and storing instructions that, when executed, cause the at least one processor to perform operations according to some implementations of the present disclosure. A (non-transitory) computer-readable storage medium may store at least one computer program including instructions that, when executed by at least one processor, cause the at least one processor to perform operations according to some implementations of the present disclosure. A computer program or computer program product may be recorded on at least one (non-transitory) computer-readable storage medium and include instructions that, when executed, cause (at least one processor) to perform operation according to some implementations of the present disclosure. In the BS, the processing device, the (non-transitory) computer-readable storage medium, and/or the computer program product, the operations may include, when the BS is a TN BS (yes in S1701), transmitting SSBs on a cell according to an SSB occasion pattern defined for a TN (refer to the synchronization raster for the TN, the SSB for the TN, the SSB burst for the TN, and the SSB periodicity for the TN, described in Alt 1 to Alt 3) (S1703a). The operations may include, when the BS is an NTS BS (no in S1701), transmitting SSBs on the cell according to an SSB occasion pattern defined for an NTN (refer to the synchronization raster for the NTN, the SSB for the NTN, the SSB burst for the NTN, and the SSB periodicity for the NTN, described in Alt 1 to Alt 3) (S1703b).

The above-described examples of the present disclosure are provided to enable those skilled in the art to implement and practice the present disclosure. Although the present disclosure has been described with reference to the examples of the present disclosure, those skilled in the art may make various modifications and changes to the examples of the present disclosure. Therefore, the present disclosure is not intended to be limited to the examples described herein, but rather to afford the widest scope consistent with the principles and novel features described herein.

Implementations of the present disclosure may be used for a BS, a UE, or other equipment in a wireless communication system.

## Claims

1. A method for receiving a downlink signal by a user equipment (UE) in a wireless communication system, the method comprising:
attempting to detect a synchronization signal block (SSB) on a first frequency band supporting both a terrestrial network (TN) and a non-terrestrial network (NTN);
acquiring time and frequency synchronization with a cell based on detection of an SSB on the cell; and
transmitting a physical random access channel (PRACH) based on the SSB,
wherein attempting to detect the SSB on the first frequency band comprises:
attempting SSB detection based on a first SSB timing pattern defined for the TN; and
attempting SSB detection based on a second SSB timing pattern defined for the NTN, and
wherein the second SSB timing pattern includes a smaller number of SSB timings than the number of SSB timings in the first SSB timing pattern.

2. The method of claim 1, wherein attempting SSB detection based on the first SSB timing pattern is performed on a first synchronization raster defined for the TN, and
wherein attempting SSB detection based on the second SSB timing pattern is performed on a second synchronization raster defined for the NTN.

3. The method of claim 1, wherein each SSB timing within the first SSB timing pattern and the second SSB timing pattern corresponds to an SSB within a synchronization signal (SS) burst transmitted with a predetermined periodicity.

4. The method of claim 1, wherein the SSB timings within the first SSB timing pattern are associated with SSBs within a first SS burst,
wherein the SSB timings within the second SSB timing pattern are associated with SSBs within a second SS burst, and
wherein the first SS burst and the second SS burst exist in different half frames.

5. The method of claim 1, wherein the first SSB timing pattern has a first periodicity, and
wherein the second SSB timing pattern has a second periodicity longer than the first periodicity.

6. The method of claim 1, further comprising attempting SSB detection based on a third SSB timing pattern on a second frequency band that does not support the NTN.

7. A user equipment (UE) configured to receive a downlink signal in a wireless communication system, the UE comprising:
at least one transceiver;
at least one processor; and
at least one computer memory operably connected to the at least one processor and storing instructions that, when executed, cause the at least one processor to perform operations,
wherein the operations include:
attempting to detect a synchronization signal block (SSB) on a first frequency band supporting both a terrestrial network (TN) and a non-terrestrial network (NTN);
acquiring time and frequency synchronization with a cell based on detection of an SSB on the cell; and
transmitting a physical random access channel (PRACH) based on the SSB,
wherein attempting to detect the SSB on the first frequency band comprises:
attempting SSB detection based on a first SSB timing pattern defined for the TN; and
attempting SSB detection based on a second SSB timing pattern defined for the NTN, and
wherein the second SSB timing pattern includes a smaller number of SSB timings than the number of SSB timings in the first SSB timing pattern.

8. A processing device in a wireless communication system, comprising:
at least one processor; and
at least one computer memory operably connected to the at least one processor and storing instructions that, when executed, cause the at least one processor to perform operations,
wherein the operations include:
attempting to detect a synchronization signal block (SSB) on a first frequency band supporting both a terrestrial network (TN) and a non-terrestrial network (NTN);
acquiring time and frequency synchronization with a cell based on detection of an SSB on the cell; and
transmitting a physical random access channel (PRACH) based on the SSB,
wherein attempting to detect the SSB on the first frequency band comprises:
attempting SSB detection based on a first SSB timing pattern defined for the TN; and
attempting SSB detection based on a second SSB timing pattern defined for the NTN, and
wherein the second SSB timing pattern includes a smaller number of SSB timings than the number of SSB timings in the first SSB timing pattern.

9. A computer-readable storage medium storing at least one program code including instructions that, when executed, cause at least one processor to perform operations,
wherein the operations include:
attempting to detect a synchronization signal block (SSB) on a first frequency band supporting both a terrestrial network (TN) and a non-terrestrial network (NTN);
acquiring time and frequency synchronization with a cell based on detection of an SSB on the cell; and
transmitting a physical random access channel (PRACH) based on the SSB,
wherein attempting to detect the SSB on the first frequency band comprises:
attempting SSB detection based on a first SSB timing pattern defined for the TN; and
attempting SSB detection based on a second SSB timing pattern defined for the NTN, and
wherein the second SSB timing pattern includes a smaller number of SSB timings than the number of SSB timings in the first SSB timing pattern.
